# EUROPÄISCHE PATENTSCHRIFT

(11) **EP 0 780 621 B1**
(45) Veröffentlichungstag und Bekanntmachung des Hinweises auf die Patenterteilung: **27.06.2001**
(21) Anmeldenummer: 96120169.6
(22) Anmeldetag: 13.12.1996
(51) Int. Cl.: F16L 55/033

(54) **Fluidführungselement zum Dämmen und Dämpfen von sich in Hauptkanälen ausbreitenden Geräuschen mit einem Schalldämpfer und/oder einem Verbindungskanal**
Pipe element used for decreasing and attenuating noise propagated by main pipes and having a sound absorber and/or a branch pipe
Element de tuyau avec silencieux et/ou tuyau de dérivation utilisé pour réduire et amortir le bruit dans les canalisations principales

(30) Priorität: 20.12.1995 DE 19547565
(43) Veröffentlichungstag der Anmeldung: 25.06.1997
(73) Patentinhaber: Norres, Richard, 45896 Gelsenkirchen (DE); Norres, Albert, 45896 Gelsenkirchen (DE)
(72) Erfinder: Norres, Richard, 45896 Gelsenkirchen (DE); Norres, Albert, 45896 Gelsenkirchen (DE)
(74) Vertreter: Eichelbaum, Lambert, Dipl.-Ing.

(56) Entgegenhaltungen:
- EP-A- 0 196 812
- WO-A-96/18065
- DE-A- 4 445 794
- DE-B- 1 131 463
- US-A- 2 075 263
- US-A- 3 670 844

## Beschreibung

Die Erfindung betrifft ein Fluidführungselement mit schallweichen Wänden zum Dämmen und Dämpfen von sich in Hauptkanälen ausbreitenden Geräuschen, welches aus einer flexiblen, mit an ihrer Außenseite massebehafteten Elementen versehenen sowie je nach mechanischer, chemischer oder kalorischer Belastung durch das Fluid resistenten Innenschlauchhülle, aus einer Außenschlauchhülle und aus einer zwischen den Schlauchhüllen angeordneten, weichen sowie gleichfalls flexiblen und zumindest gegen kalorische Belastungen resistenten Materialeinlage hergestellt ist und zwischen seinem Fluideinlaß und seinem Fluidauslaß mindestens eine Windung von 360° aufweist.

Ein derartiges Fluidführungselement ist in den beiden noch nicht veröffentlichten deutschen Patenten P 44 45 794.4-53 und P 44 45 795.2-53 offenbart. Bei dem erstgenannten Patent besteht die Innenschlauchhülle je nach mechanischer, chemischer oder kalorischer Belastung durch ein zu führendes Gas als Fluid aus einem Textil, Metalldraht-, Glasfaser-, Synthetik-, Natur-, Keramikgewebe, Nonwoven oder einer weichen dünnen Folie aus Polyurethan oder Polyamid oder Polytetrafluorethylen oder einer Kombination dieser Materialien, welche an ihrer Außenseite mit massebehafteten Metallelementen verbunden ist. Die Materialeinlage ist aus einem Haufwerk von Mineralfasern und/oder Metallfasern und/oder Spänen und/oder von Chips aus entropieelastischen Materialien hergestellt und das Fluidführungselement zwischen seinem Gaseinlaß und seinem Gasauslaß mit mindestens einer Windung von 360° versehen.

Nach dem zweiten nicht veröffentlichten Patent besteht die Außenschlauchhülle aus einem Behälter mit schallweichen oder schallharten Wänden, in welcher eine Innenschlauchhülle nach dem erstgenannten Patent angeordnet und der Zwischenraum mit der Materialeinlage ausgefüllt ist.

Bei zu wartenden Gasturbinen oder Air-driver-pumps an Großraumflugzeugen, beispielsweise bei denen der Boeing-Maschinen des Types 747, muß mit einer Schallintensität am Ausgang der Turbine von 150 dB(A) und einer Gastemperatur von ca. 200 °C und an den Hauptturbinen mit einer Schallintensität von 165 dB(A) und einer Kernstrahltemperatur von 820 °C gerechnet werden, wobei eine derartige Schallintensität für einen Menschen Lebensgefahr bedeutet. Erste Versuche mit einem nach den vorgenannten, nicht veröffentlichten Patenten aufgebauten Fluidführungselement für Gase haben bei einer Schallintensität am Gaseinlaß von 150 dB(A) bei nur einer kreisförmigen Spiralwindung von 360° des Fluidführungselementes eine Schallintensitätsminderung auf 108 dB(A) am Gasauslaß ergeben. Bei drei kreisförmigen Spiralwindungen des Fluidführungselementes und bei einer Schallintensität von 150 dB(A) am Gaseinlaß wurden am Gasauslaß nur noch 89 dB(A) gemessen. Eine derartig überraschend starke Minderung der Schallintensität ist nach diesseitigen Feststellungen mit sämtlichen herkömmlichen und bekannten Fluidführungselementen nicht möglich. Diese vorteilhafte Wirkung läßt sich nur durch den besonderen Aufbau des Fluidführungselementes sowie durch ein Ausschwingen der schweren, massebehafteten Metallelemente, insbesondere der Metallringe bzw. der Metallspirale, in die flexible Materialeinlage erklären, wodurch wahrscheinlich hauptsächlich durch Absorption und zu einem geringeren Teil durch Reflexionen und Interferenzerscheinungen die zuvor aufgezeigte Schallintensitäts-Minderung erreicht werden dürfte.

Bei einem bekannten Fluidführungselement für Gase ähnlicher Art gemäß der DE-OS 27 49 665 besteht die Innenschlauchhülle aus einem weitmaschigen Gewebe, welches an ihrer Innenseite zur Verstärkung mit einem Spiraldraht als massebehaftetes Element versehen ist. Die Außenschlauchhülle wird von einer Folie gebildet, wobei zwischen dieser Folie und dem Gewebe ein Schaumstoff als Materialeinlage eingebracht ist. Die kreisringförmigen Endbereiche dieses flexiblen sowie geradlinig ausgebildeten Fluidführungselementes werden von aufgeklebten Endkappen verschlossen. Nach den Vorstellungen des Erfinders dieses Fluidführungselementes soll der Schall durch die Maschen des Gewebes der Innenschlauchhülle in die aus einem Schaumstoffkörper bestehende Materialeinlage eindringen und dort gedämpft werden. Derartige Fluidführungselemente sind aufgrund des ungeschützten Schaumstoffkörpers weder temperaturbeständig noch abriebfest und aus diesem Grunde zur Schalldämmung und -dämpfung nur bedingt geeignet. Zum Dämmen und Dämpfen von Schallemissionen von hoher Schallintensität in heißen Gasen aus Gasturbinen oder in heißen, aggressiven Säuren oder Laugen kommen derartige Fluidführungselemente nicht in Betracht.

Bei einem weiteren Fluidführungselement für Gase gemäß der DE 38 30 346 C2 wird die Innenschlauchhülle von einem flexiblen, gewellten sowie perforierten Grundelement gebildet, auf dessen Außenseite als Schallschluckmaterial ein offenporiger Schaum aus polymerem Material aufgebracht ist, der an seiner Außenumfangsfläche von einer kompakten Haut als Außenschlauchhülle umgriffen ist. Auch dieses Fluidführungselement kommt zur Führung von heißen Gasen und Dämpfen, wie sie bei Gasturbinen auftreten, ebensowenig in Betracht wie zur Schalldämmung und Dämpfung der Schallintensitäten von Pumpen für heiße Säuren und Laugen, obgleich in absoluter Betrachtung eine Senkung des Schalldruckpegels um 3 dB(A) bereits eine Reduzierung der Schallintensität um die Hälfte bedeutet.

Ferner sind aus der DE 32 20 023 C3 und der gleichlautenden EP 0 095 582 ein Fluidführungselement für Gase bekannt geworden, dessen Außenschicht aus einem überwiegend geschlossenzelligen, elastischen, thermoplastischen Schaumstoff besteht, wohingegen dessen Innenschicht, die überwiegend die Aufgabe der Schallabsorption übernehmen soll, aus einem offenzelligen Weichschaumstoff, beispielsweise aus einem Polyurethanweichschaum, gebildet ist. Die beiden Schichten sind entweder durch Flammkaschierung oder durch einen Haftvermittler verbunden. Zwischen den Schichten ist auch eine Materialeinlage in Form einer Verstärkungsschicht, beispielsweise ein Gelege, Gewebe oder Gewirke aus Textil und/oder Glasfasern in Betracht gezogen. Auch dieses Fluidführungselement kommt aufgrund seiner Materialzusammensetzung weder für heiße Gase noch für heiße, aggressive Flüssigkeiten in Betracht.

Und schließlich ist aus der US-PS 3 374 856 ein Fluidführungselement für Gase anderer Gattung bekanntgeworden, welches sich aus einer gewellten Außenschlauchhülle aus gummi- oder kunststoff imprägnierten Gewebe besteht, während die Innenschlauchhülle aus einem synthetischen Kunststoff, z.B. Urethangummi, hergestellt ist. Eine Materialeinlage als Zwischenhülle fehlt. Die Figur 2 dieser Druckschrift zeigt eine Biegung eines derartigen Fluidführungselementes um 180°, um deren Flexibiliät zu belegen. Eine Einbaulage in dieser gebogenen Form wird in dieser Vorveröffentlichung jedoch noch nicht einmal andeutungsweise erwähnt. Auch dieses Fluidführungselement ist aufgrund seiner temperaturunbeständigen Materialien nicht zur Schalldämmung oder -dämpfung von Schallintensitäten in heißen Gasen von Gasturbinen oder in aggressiven Flüssigkeiten von Pumpen der chemischen Industrie geeignet.

Neben diesen Fluidführungselementen für Gase mit schallweichen Wänden gibt es noch eine Reihe von Schalldämpfern mit schallharten Wänden, wie sie z. B. in der US-PS 2 886 121, der US-PS 3 187 835, der US-PS 3 415 337, US-PS 3 227 240, der EP 0 346 551 B1, der EP 0 493 161 A1 und der DE-OS 2 264 354 offenbart sind, die allesamt nicht Gegenstand der vorliegenden Erfindung sind.

Von diesem Stand der Technik ausgehend, liegt der Erfindung die Aufgabe zugrunde, ein Fluidführungselement mit schallweichen Wänden gemäß der eingangs genannten Gattung bei preiswerter Herstellung und leichter Handhabbarkeit derart auszubilden, daß es eine Schallintensitätsminderung der beiden nächstkommenden sowie eingangs genannten Fluidführungselemente noch übertrifft und in Strömungskanälen von sowohl heißen und chemisch aggressiven Gasen als auch von heißen und aggressiven Säuren und Laugen eingesetzt werden kann.

Diese Aufgabe wird in Verbindung mit dem eingangs genannten Gattungsbegriff erfindungsgemäß dadurch gelöst, daß das Fluidführungselement in seinem Innenraum als ersten Hauptkanal mit mindestens einem über seinen Querschnitt verteilten Nebenkanal mit schallweichen Wänden versehen ist, der sich nach dem vorgenannten Aufbau des Hauptkanals aus einer mit massebehafteten Elementen versehenen Innenschlauchhülle, aus einer Außenschlauchhülle und aus einer zwischen den Schlauchhüllen angeordneten, weichen Materialeinlage zusammensetzt und mit mindestens einer entweder längs im Hauptkanal oder radial zur Längsachse im Hauptkanal verlaufenden Windung von 360° versehen ist. Dabei soll der Begriff "über seinen Querschnitt verteilten Nebenkanal" dahingehend verstanden werden, daß die Nebenkanäle sowohl in Längsrichtung des Hauptkanals über dessen Innenquerschnitt verteilt verlaufen als auch dergestalt ausgebildet sein können, daß nur ein einziger Nebenkanal unter Ausfüllung des Innenquerschnittes des Hauptkanals mehrfach darin nach Art einer zylindrischen Schraubenfeder gewunden ist, daß er mit seiner Außenumfangsfläche die Innenschlauchhülle des Hauptkanals tangiert und damit darin abdichtend angeordnet ist. In diesem Fall können die Fluide nur durch den Innenquerschnitt des Nebenkanals strömen. Es ist jedoch auch möglich, daß der Nebenkanal den Querschnitt nicht vollständig ausfüllt, sondern im Querschnitt des Hauptkanals "schwimmt", so daß das Fluid sowohl durch den Nebenkanal als auch zwischen der Außenschlauchhülle des Nebenkanals und der Innenschlauchhülle des Hauptkanals strömen kann, wobei der dem Verlauf des Hauptkanals folgende Nebenkanal mindestens die gleiche Windung wie der Hauptkanal durchführt.

Durch diese Ausbildung konnten die Schallintensitäten sowohl einer Durchströmung der Haupt-und Nebenkanäle durch heiße Gase als auch durch heiße, aggressive Flüssigkeiten erheblich herabgesetzt werden, wobei die Materialzusammensetzung der Innenschlauchhülle, der Außenschlauchhülle und der Materialeinlage zwischen diesen beiden Hüllen je nach mechanischer, chemischer und kalorischer Belastung aus den noch zu beschreibenden Werkstoffen ohne Schwierigkeiten zusammengesetzt werden können. Dabei umfaßt der Begriff der "Windung" keineswegs nur eine "Kreiswindung". So kann eine Windung einerseits von einer kreisförmigen, einer archimedischen, hyperbolischen oder einer logarithmischen Spirale gebildet sein oder andererseits von einer elliptischen oder ovalen Schleife bis hin zu einer Knotenwindung bestehen und schließlich auch die Form einer Schlangenlinie, insbesondere die Form einer sinusförmigen Schlangenlinie aufweisen. Allgemein soll unter einer "Windung" im Sinne der Erfindung eine solche verstanden werden, die sich von einem geometrischen Mittelpunkt aus bis zum Kreuzungsbereich ihrer Enden durch sämtliche vier Quadranten eines gedachten kartesischen Koordinatensystems erstreckt. Eine Ausnahme hiervon wird lediglich von einer sich nur durch zwei Quadranten erstreckenden Schlangenlinie gebildet.

Erste Versuche mit einem derart aufgebauten Fluidführungselement haben bei heißen Verbrennungsgasen einer Gasturbine mit einer Schallintensität an ihrem Gasauslaß von 155 dB(A) bei nur drei Spiralwindungen sowohl des Haupt- als auch des Nebenkanals eine Schallintensität am Fluidauslaß des Hauptkanals von 92 dB(A) ergeben.

Beim Anschluß eines derartigen Fluidführungselementes zum Dämmen und Dämpfen von sich in Hauptkanälen ausbreitenden Geräuschen muß es oft über einen Adapter sowie einen Verbindungskanal an die Schallquelle angeschlossen werden, weil es in unmittelbarer Nähe des Gasauslasses, z.B. einer Gasturbine, hinderlich im Wege steht.

Nach einer besonders vorteilhaften Weiterbildung der Erfindung wird nunmehr dieser Verbindungskanal gleichfalls als Fluidführungselement zum Dämmen und Dämpfen ausgebildet. Dies erfolgt dadurch, daß zwischen dem Einlaß zum ersten Hauptkanal und am Auslaß einer Schallquelle ein Verbindungskanal als zweiter Hauptkanal mit mindestens einem über seinen Querschnitt verteilten Nebenkanal mit schallweichen Wänden angeordnet ist. Ein derartiges Fluidführungselement mit zwei hintereinander angeordneten Hauptkanälen mit entsprechenden Nebenkanälen ergab bei heißen Verbrennungsgasen einer Gasturbine eine Schallintensitätsherabsetzung von 155 dB(A) auf 78 dB(A). Demzufolge konnte durch den entsprechend aufgebauten zweiten Hauptkanal mit seinen Nebenkanälen eine Schalldämpfung von 92 dB(A) auf 78 dB(A) erzielt werden, was eine weitere Schallintensitätsminderung um fast das Fünffache bedeutet.

Vorteilhaft bestehen sowohl die Innenschlauchhülle der Hauptkanäle als auch die Innenschlauchhülle der Nebenkanäle je nach mechanischer, chemischer oder kalorischer Belastung durch das zu führende Fluid aus einem Textil, aus Metalldraht-, Glasfaser-, Synthetik-, Natur-, Keramikgewebe, Nonwoven, Metallfilm, wie Nickel oder Edelstahlfilme, oder einer weichen, dünnen Folie aus Polyurethan, Polysulfon, Polyimid, Polyamid, Polyester, Polypropylen oder Polytetrafluorethylen oder Tetrafluorethylen-Derivate (PFA und FEP) oder einer Kombination dieser Materialien. Dabei können die Materialien vom Textil bis zum Nonwoven unbeschichtet sein oder bei erwünschter Gas- und Flüssigkeitsdichtigkeit mit einem entropieelastischen Material, wie Naturkautschuk, Gummi oder einem Kunststoff, beschichtet oder mit einer Aluminiumbeschichtung oder -bedampfung von z.B. 4 µ bis 50 *µ*, oder einer mittels einer Kathodenzerstäubung (sputtering) aufgebrachten Metallbeschichtung versehen werden.

Die Materialeinlage besteht zwischen der Innen- und der Außenschlauchhülle der Haupt- und Nebenkanäle aus einem Haufwerk von Mineralfasern und/oder Metallfasern und/oder Spänen und/oder Chips aus entropieelastischen Materialien oder aus einem eingeschäumten, wärmebeständigen, entropieelastischen Werkstoff.

Die Außenschlauchhülle der Hauptkanäle und der Nebenkanäle besteht in Weiterbildung der Erfindung aus einem gas- und flüssigkeitsdichten Kunststoff, wie Polytetrafluorethylen (PTFE), Polyamid (PA), Polysulfon, Polyimid, Polyester (PETP), Polypropylen (PP) oder einem ein- oder beidseitig mit diesen Kunststoffen beschichteten oder unbeschichteten Textil aus Draht- oder Glasfaser, Synthetik-, Natur- oder Keramikgewebe, aus Nonwoven oder einer Werkstoffkombination dieser Materialien. Die Wahl dieser Materialien hängt entscheidend von dem Fluid ab, welches die Außenschlauchhülle beaufschlagt. Die Außenschlauchhülle der Hauptkanäle dürfte in aller Regel von Luft beaufschlagt werden. Die Außenschlauchhülle der Nebenkanäle hingegen kann heißen Gasen und aggressiven sowie heißen Flüssigkeiten ausgesetzt sein. Dementsprechend ist für die Außenschlauchhülle der Nebenkanäle ein entsprechend resistenter Werkstoff zu wählen.

Nach einer besonders vorteilhaften Weiterbildung der Erfindung ist jede Windung des Fluidführungselementes, und zwar sowohl der Hauptkanal als auch der Nebenkanäle, mit einem möglichst engen Windungsradius zu versehen. Zur Erfüllung dieses Zweckes ist es besonders vorteilhaft, daß die Außenschlauchhülle der Nebenkanäle und/oder der Hauptkanäle - insbesondere dann, wenn es sich bei dem Hauptkanal um einen Verbindungskanal handelt - aus mehreren sich gegenseitig überlappenden und dabei stets die massebehafteten Elemente abdeckenden sowie von der Außenwand der Innenschlauchhülle beginnenden, ring- oder spiralförmig gewundenen Lagen aus Filz, Nonwoven, Mineralwolle oder texturiertem Gewebe aus Stahlfaser besteht, die in Verbindung mit der zwischen den Lagen befindlichen Luft und/oder mit einem wärmebeständigen, hineingeschäumten, entropieelastischen Werkstoff zugleich die Materialeinlage bilden. Derartig ausgebildete Schlauchhüllen haben sich insbesondere für den Einbau und ihre Verwendung als Nebenkanäle bewährt, weil sie aufgrund der überlappenden Materiallagen einen engen Windungsradius bei hoher Biegeflexibilität gewährleisten.

Bei der Ausbildung der massebehafteten Elemente zur Aufnahme/Ableitung der Schwingungsenergien sind verschiedene Ausführungsformen möglich:

Nach einer ersten Ausführungsform bestehen die massebehafteten Elemente aus metallischen oder keramischen Einzelringen, welche die Innenschlauchhülle der Haupt- und der Nebenkanäle umgreifen oder die aus Schlauchabschnitten bestehende Innenschlauchhülle zusammenhalten.

Nach einer zweiten Ausführungsform sind die massebehafteten Elemente sowohl der Hauptkanäle als auch der Nebenkanäle von einer Metall- oder Keramikspirale gebildet sind, welche die aus spiralförmigen Materialbahnen bestehende Innenschlauchhülle an ihren sich überlappenden Seitenenden zusammenhält. Bei diesen Ausführungsformen bestehen die Schlauchhüllen in an sich bekannter Weise aus spiralförmigen Materialbahnen, deren sich überlappende Seitenenden einen Stützkörper aus Metall oder Keramik umhüllen und gemeinsam mit diesem von einem Klemmkörper aus Metall oder Keramik mit C-förmigem Querschnitt umgriffen sind, dessen an seiner öffnungsseite gegenüberliegende Schenkelleisten die Materialbahnen und deren sich überlappende Seitenenden an dieser Stelle klemmen. Eine Schlauchhülle dieser Art ist in allen Einzelheiten und in mehreren Varianten in der DE 37 20 231 A1 beschrieben. Durch die Einfügung eines metallischen oder keramischen Stützkörpers in einen metallischen oder keramischen Klemmkörper mit C-förmigem Querschnitt wird nicht nur eine dauerhaft haltbare Verbindung zwischen den schallweichen Wänden und den Metallelementen geschaffen, sondern letztere auch mit einer erheblichen Masse behaftet, welche der Schalldämmung förderlich ist. Dabei haben sich keramische Klemmkörper bei hohen Temperaturbelastungen besser bewährt als metallische, die beispielsweise bei heißen Gasen oberhalb von ca. 500 °C zu Aufweichungen neigen.

Nach einer dritten Ausführungsform bestehen die massebehafteten Elemente aus regelmäßig an der Außenseite der Innenschlauchhülle der Hauptkanäle und der Nebenkanäle befestigten Metall- oder Keramikstücken.

Nach einer vierten Ausführungsform werden die massebehafteten Elemente sowohl der Hauptkanäle als auch der Nebenkanäle aus einer die Innenschlauchhülle umgreifenden Metall- oder Keramikspirale und aus einem diese wiederum umgreifenden sowie mit der gleichen Windungsform versehenen Rohr, Schlauch oder ähnlichen Behälter aus Metall oder Keramik gebildet, die mit der jeweiligen Metall- oder Keramikspirale durch Klammern oder eingeklipste Bänder verbunden sind, wobei der Zwischenraum zwischen der Innenwand des Rohres oder Schlauches und der Außenwand der Innenschlauchhülle mit Wasser, Hochtemperaturöl oder einer schmelzenden Metallegierung gefüllt ist.

Um die Schallintensitätminderung durch Schallabsorption, Schallreflexion oder Interferenzerscheinungen zu fördern, sind unterschiedliche Anordnungsalternativen der Nebenkanäle innerhalb der Hauptkanäle möglich:

Nach einer ersten Ausführungsform sind die Nebenkanäle im ersten und/oder jeden weiteren Hauptkanal um die mittlere Längsachse der Hauptkanäle miteinander kordelähnlich verdrillt. Durch eine Verdrillung mit möglichst engem Windungsradius wird insbesondere bei hohen Schallpegeln von heißen Gasen eine Schallminderung um das Zwanzig- bis Dreißigfache erzielt.

Ähnliches gilt nach einer weiteren Ausführungsform der Erfindung, wenn die Nebenkanäle sowohl im ersten als auch im zweiten Hauptkanal in Richtung der Längsachse der Hauptkanäle verlaufen und mit gleichmäßigen oder ungleichmäßigen Unterbrechungen versehen sind. Auf diese Weise werden Modenabbrüche mit verschieden langen Unterbrechungen der Nebenkanäle erzielt, während bei der Verdrillung um die Längsachse die Moden komprimiert und durch das Ausschwingen der massebehafteten Elemente in die zwischen Innen- und Außenschlauchhülle befindlichen Materialeinlagen in eine andere Energieart überführt und weitgehend vernichtet werden.

Eine weitere Modenreduzierung sowie ein Druckausgleich zwischen den Nebenkanälen kann nach einer dritten Ausführungsform dadurch erzielt werden, daß die Nebenkanäle in ihren Wandungen mit beliebigen, insbesondere siebartigen Durchgangsöffnungen zu benachbarten Nebenkanälen versehen werden.

Bei der Formgebung und Anordnung der Nebenkanäle innerhalb der Hauptkanäle sind mehrere Ausführungsalternativen gegeben. So kann die Querschnittsform der Haupt- und der Nebenkanäle im ersten und/oder zweiten Hauptkanal entweder kreisrund, elliptisch oder ellipsenabschnittsförmig gestaltet sein. So kann nach einer ersten Ausführungsalternative im Hauptkanal nur ein Nebenkanal in Form einer zylindrischen Schraubenfeder mit möglichst engem Windungsradius dergestalt angeordnet werden, daß er mit einer Außenumfangslinie die Innenschlauchhülle der Hauptkanäle tangiert und das Fluid an einem Durchströmen hindert. In diesem Fall dient der Hauptkanal nur als Behälter zur Aufnahme des spiralförmig gewundenen Nebenkanals. Das Fluid strömt in jedem Fall nur durch den Innenquerschnitt des Nebenkanals.

Nach einer weiteren Ausführungsform sind in einem kreisrunden Querschnitt der Hauptkanäle mindestens drei Nebenkanäle mit gleichem Durchströmquerschnitt angeordnet, die sich untereinander an ihren Außenflächen und an der Innenwand der Hauptkanäle tangieren und längs in jedem Hauptkanal verlaufen. Dabei kann die Ausbildung der drei Nebenkanäle in ihrer Querschnittsform sehr unterschiedlich sein, beispielsweise elliptisch, ovalförmig, ellipsenabschnittsförmig oder kreisförmig.

Werden in einem kreisrunden Querschnitt eines Hauptkanals drei um je 120° zueinander versetzte sowohl sich untereinander als auch die Innenwand der Innenschlauchhülle des Hauptkanals tangierende Nebenkanäle mit kreisrunder Querschnittsform angeordnet, so entstehen in Längsrichtung des Hauptkanals einerseits Durchströmkanäle mit dem kreisrunden Querschnitt der Nebenkanäle und andererseits davon abweichende Durchströmkanäle, die sich aus Kreisabschnitten der Außenschlauchhüllen der Nebenkanäle und der Innenschlauchhülle des betreffenden Hauptkanales zusammensetzen. Da sich ein jedes Fluid den Weg des geringsten Strömungswiderstandes sucht, wird die Masse des Fluides durch den größeren Querschnitt der Nebenkanäle strömen und nur ein geringerer durch die davon abweichenden Querschnittsformen zwischen den Außenschlauchhüllen der Nebenkanäle und der Innenschlauchhülle des Hauptkanals. Da aufgrund der Windungen mit engem Windungsradius der Dämpfungseffekt auf die Moden sowohl in den Hauptkanälen als auch in den Nebenkanälen sehr hoch ist, spielt die Abweichung der Druckverluste des Fluids, bezogen auf die Schalldämmung, keine relevante Rolle mehr. Ein Druckausgleich kann auch durch die bereits beschriebenen Durchtrittsöffnungen von Nebenkanal zu Nebenkanal geschaffen werden.

Nach einer weiteren vorteilhaften Ausführungsform sind im ersten und/oder im zweiten Hauptkanal mit kreisrundem Querschnitt insgesamt sieben Nebenkanäle mit untereinander gleichem kreisrundem Querschnitt gleichmäßig angeordnet, von denen einer konzentrisch zur Längsachse des Hauptkanals und die anderen sechs um je 60° zueinander um den ersten herum angeordnet sind, die sich untereinander tangieren und von denen die sechs außenliegenden Nebenkanäle auch die Innenwand der Innenschlauchhülle des Hauptkanals tangieren. Auch bei dieser Ausführungsform können einerseits die Nebenkanäle in Form einer zylindrischen Schraubenfeder gewunden sein oder nach Art einer Kordel um die Längsachse des Hauptkanals verdrillt sein. Beide dieser völlig unterschiedlichen Arten der Verwindung ergeben in überraschender Weise die ausgezeichneten Schallintensitätsminderungen der vorbeschriebenen Art. Eine besonders vorteilhafte Schalldämmung ergibt sich bei jeweils mindestens drei Windungen des Hauptkanals und der Nebenkanäle.

Wie Versuche zwischenzeitlich gezeigt haben, können die Moden und sonstige Schallfeldstrukturen in ihrer Intensität nicht nur bei der Durchströmung der Hauptkanäle und Nebenkanäle durch heiße Gase als Fluide, sondern ihre vorteilhafte Wirkung auch bei Durchströmung von einem flüssigen Fluid, z.B. einer äußerst heißen sowie aggressiven Säure oder Lauge, entfalten.

Als Fluid kommt auch ein Gemisch aus einem Verbrennungsgas und beispielsweise Wasser infrage. Dabei kann eine weitere Dämpfung dadurch erzielt werden, daß eine Sprühvorrichtung zum Einsprühen von Wasser im Haupt-und/oder Nebenkanal vorgesehen ist. Bei der Dämpfung von Geräuschen in Abgaskanälen von Schiffen und Sportbooten ist ein Einsprühen von Wasser in die Haupt- und/oder Nebenkanäle zumeist nicht erforderlich, weil in diese Abgaskanäle Wasser unterschiedlicher Herkunft mit hineingerissen und dieses Gemisch auch zum Gasauslaß gelangt. Aus all diesen Gründen wird unter dem Begriff eines Fluides erfindungsgemäß sowohl ein gasförmiges als auch ein flüssiges als auch ein Gemisch aus flüssigen und gasförmigen Medien sowie weiterhin ein Gemisch aus einem Gas wie Luft und damit geförderte Feststoffe verstanden.

Mehrere Ausführungsbeispiele der Erfindung sind in den Zeichnungen dargestellt. Dabei zeigen:
Fig. 1 einen Teil-Längsquerschnitt durch ein Fluidführungselement mit einer glatt ausgebildeten Außenschlauchhülle, einer Materialeinlage und einer Innenschlauchhülle, die aus zwei spiralförmigen Materialbahnen besteht, die von einem spiralförmigen Klemmkörper aus Metall oder Keramik mit C-förmigem Querschnitt und einem metallischen Stützkörper aus Metall oder Keramik zusammengehalten sind,
Fig. 2 einen Teil-Längsquerschnitt durch eine zweite Ausführungsform eines Fluidführungselementes, bei dem auch die Außenschlauchhülle aus zwei spiralförmigen Materialbahnen besteht, die von einem spiralförmigen Klemmkörper mit C-förmigem Querschnitt und einem Stützkörper zusammengehalten sind,
Fig. 3 einen Teil-Längsquerschnitt durch eine dritte Ausführungsform eines Fluidführungselementes, bei welchem die Innenschlauchhülle aus zwei spiralförmigen Materialbahnen besteht, die von einem spiralförmigen Klemmkörper mit C-förmigem Querschnitt und einem metallischen Stützkörper zusammengehalten sind, wobei jeweils eine weitere teils eingeklemmte teils nicht eingeklemmte Materialbahn die nachfolgenden Klemmkörper mit C-förmigem Querschnitt überlappend überdeckt,
Fig. 4 einen Teil-Längsquerschnitt gemäß Fig. 3, jedoch mit einem nach Art einer zylindrischen Schraubenfeder mit engem Windungsradius hineingewundenen Nebenkanal,
Fig. 5 einen Querschnitt durch einen Hauptkanal, in welchem drei jeweils um 120° zueinander versetzte Nebenkanäle mit gleichem kreisrundem Querschnitt angeordnet sind,
Fig. 6 eine Querschnittsansicht durch einen Hauptkanal, in welchem sieben Nebenkanäle mit gleichem Durchströmquerschnitt angeordnet sind, von denen einer konzentrisch und die anderen jeweils um 60° zueinander versetzt angeordnet sind,
Fig. 7 eine der Fig. 5 entsprechende, jedoch perspektivische Teilansicht auf drei in einen Hauptkanal angeordnete Nebenkanäle, von denen ein Nebenkanal mit siebartigen Wanddurchbrechungen versehen ist,
Fig. 8 eine schematische Teilansicht durch einen Hauptkanal mit vier darin angeordneten und nach Art einer Kordel um die Längsachse des Hauptkanals herum verdrillten vier Nebenkanälen,
Fig. 9 eine den Figuren 5 und 7 entsprechende Ausführungsform, jedoch mit unterschiedlich langen Hauptkanal angeordneten und mit unterschiedlich langen Unterbrechungen versehenen Nebenkanälen,
Fig. 10 eine den Figuren 5 und 7 entsprechende Ausführungsform mit drei Nebenkanälen, die nach einer ersten gleich langen Unterbrechung in nur zwei Nebenkanäle übergehen und nach einer weiteren gleich langen Unterbrechung von sieben kleineren Nebenkanälen ersetzt werden,
Fig. 11 eine Querschnittansicht durch einen Hauptkanal mit ellipsenförmigem Querschnitt und vier darin angeordneten Nebenkanälen mit teilellipsenförmigem Querschnitt und
Fig. 12 eine Teil-Längsquerschnittsansicht durch einen Hauptkanal mit einem darin nach Art einer zylindrischen Schraubenfeder gemäß Fig. 4 gewundenen und in Längsrichtung geschnittenen Nebenkanal, der wiederum in vier teilellipsenförmige Nebenkanäle gemäß Fig. 11 unterteilt ist und
Fig. 13 die Querschnittsansicht einer Verbindung zwischen zwei spiralförmigen Materialbahnen mittels eines Stützkörpers und einer Spirale mit C-förmigem Querschnitt aus Metall oder Keramik in vergrößerter Darstellung.

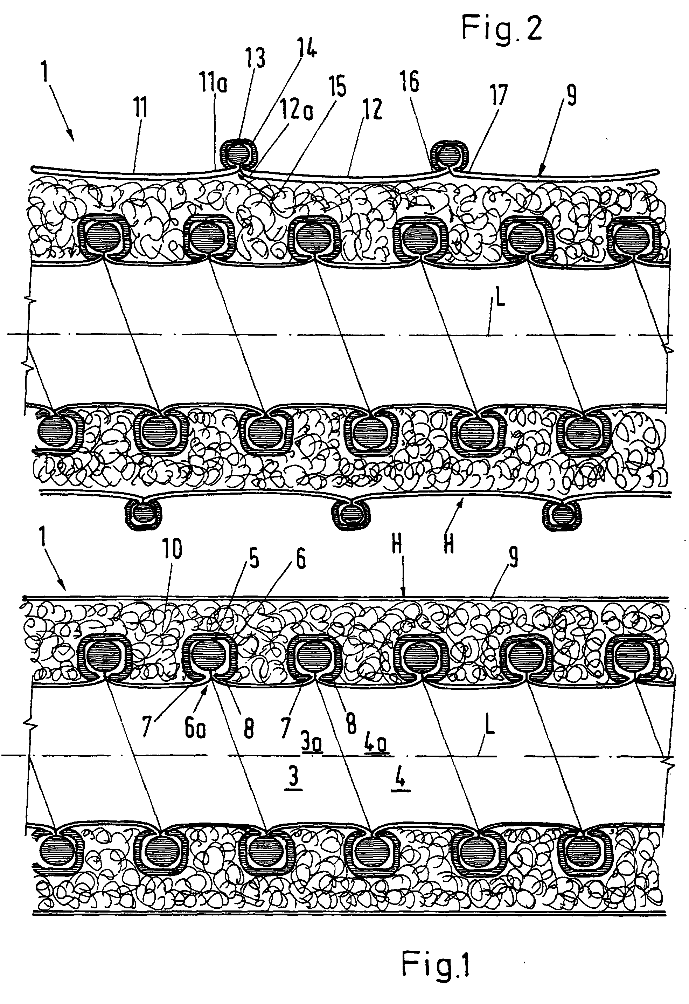

Gemäß Fig. 1 besteht nach einer ersten Ausführungsform des Fluidführungselementes 1 die Innenschlauchhülle 2 je nach der Temperatur sowie der Art (Gas oder Flüssigkeit oder Gas-Flüssigkeitsgemisch) des zu führenden Fluids aus einem Textil, aus einem Metalldraht-, Glasfaser-, Synthetik-, Natur-, Keramikgewebe, Nonwoven oder einer weichen, dünnen Folie aus Polyurethan, Polysulfon, Polyimid, Polyamid, Polyester, Polypropylen oder Polytetrafluorethylen oder einer Kombination dieser Materialien, die bei erwünschter Gas- und Flüssigkeitsdichtigkeit auch mit einem entropieelastischen Material, wie Naturkautschuk, Gummi oder einem Kunststoff, beschichtet oder mit einer dünnen Aluminiumbeschichtung von z.B. 25 *µ* bis 50 *µ* versehen werden können. Ferner setzt sich die Innenschlauchhülle 2 aus zwei spiralförmigen Materialbahnen 3, 4 gleicher Breite aus diesen Werkstoffen zusammen, deren sich überlappende Seitenenden 3a, 4a einen Stützkörper 5 aus Metall oder Keramik umhüllen und gemeinsam mit diesem Stützkörper 5 von einem Klemmkörper 6 mit C-förmigem Querschnitt umgriffen und zusammengehalten sind, dessen an seiner öffnungsseite 6a gegenüberliegende Schenkelleisten 7, 8 die Materialbahnen 3, 4 und deren sich überlappende Seitenenden 3a, 4a an dieser Stelle klemmen.

Die Außenschlauchhülle 9 besteht je nach Beaufschlagung und Verwendung des Fluidführungselementes 1 als Haupt- und/oder Nebenkanal entweder aus den gleichen Stoffen wie die Innenschlauchhülle 2 oder aus einem gas- oder flüssigkeitsdichten Kunststoff, wie Polytetrafluorethylen (PTFE), Polyamid (PA), Polysulfon, Polyimid, Polyester (PETP), Polypropylen oder einem ein- oder beidseitig mit diesen Kunststoffen beschichteten oder unbeschichteten Textil aus Draht- oder Glasfaser, Synthetik-, Natur- oder Keramikgewebe, aus Nonwoven oder einer Werkstoffkombination dieser Materialien.

Die Materialeinlage 10 zwischen der Innenschlauchhülle 2 und der Außenschlauchhülle 9 wird aus einem Haufwerk von Mineralfasern und/oder Metallfasern und/oder Spänen und/oder Chips aus wärmebeständigen, entropieelastischen Materialien oder aus einem eingeschäumten, entropieelastischen Werkstoff entsprechender Temperaturbeständigkeit gebildet.

Das Ausführungsbeispiel der Fig. 2 unterscheidet sich von dem Ausführungsbeispiel der Fig. 1 lediglich dadurch, daß bei ihm auch die Außenschlauchhülle 9 in an sich bekannter Weise aus spiralförmigen Materialbahnen 11, 12 zusammengesetzt ist, deren sich überlappende Seitenenden 11a, 12a einen Stützkörper 13 aus Metall oder Keramik umhüllen und gemeinsam mit diesem 13 von einem Klemmkörper 14 mit C-förmigem Querschnitt aus Metall oder Keramik umgriffen und zusammengehalten sind, dessen an seiner öffnungsseite 15 gegenüberliegende Schenkelleisten 16, 17 die sich überlappende Seitenenden 11a, 12a der Materialbahnen 11, 12 an dieser Stelle klemmen.

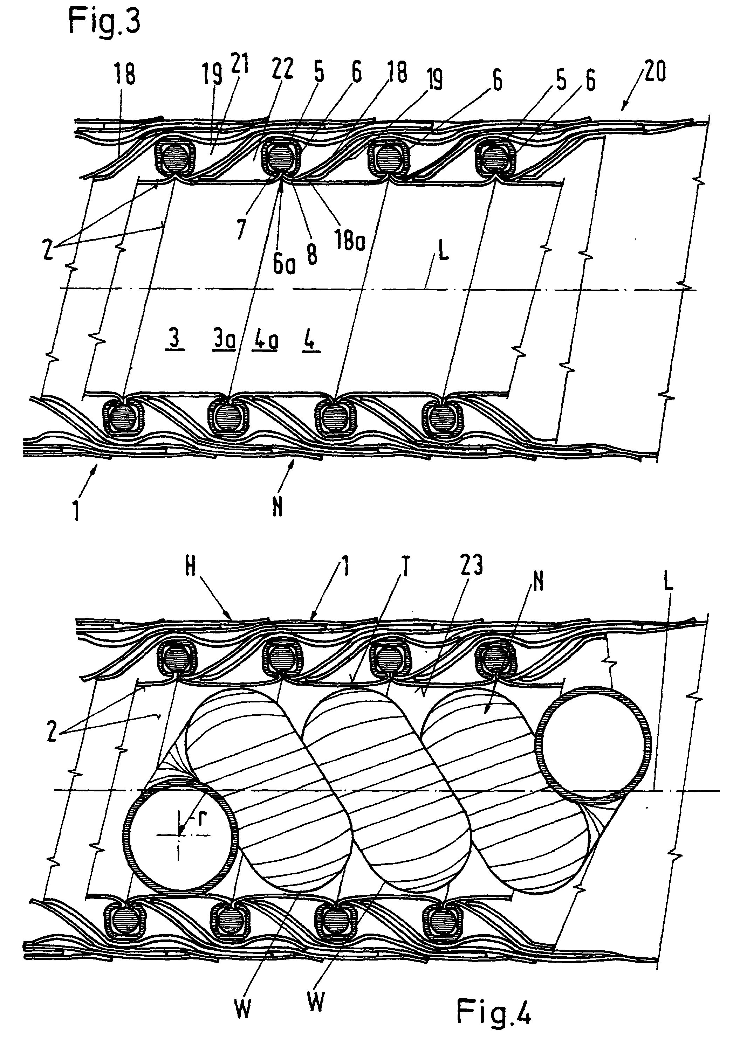

Die Ausführungsbeispiele des Fluidführungselementes 1 gemäß den Figuren 1 und 2 eignen sich besonders, aber nicht ausschließlich, zur Verwendung als Hauptkanal H. Demgegenüber eignet sich das Ausführungsbeispiel der Fig. 3 besonders, aber gleichfalls nicht ausschließlich, zur Verwendung als Nebenkanal N und Verbindungskanal, weil es sich durch eine besondere Flexibilität und Biegsamkeit ihrer geschuppten Außenschlauchhülle 9 auszeichnet. Das Ausführungsbeispiel des Fluidführungselementes 1 gemäß Fig. 3 ist bezüglich seiner Innenschlauchhülle 2 wie die Innenschlauchhülle der Ausführungsbeispiele der Figuren 1 und 2 aufgebaut. Aus diesem Grunde sind für gleiche Teile auch gleiche Bezugsziffern verwendet worden. Der wesentliche Unterschied zwischen dem Ausführungsbeispiel der Fig. 3 und denen der Figuren 1 und 2 beruht darin, daß nunmehr zusätzlich zu den beiden Materialbahnen 3, 4 eine weitere Materialbahn 18 mit vom C-förmigem Klemmkörper 6 mit ihrem Ende 18a eingeklemmt ist und mit ihrem anderen Ende zwei nachfolgende Windungen des Klemmkörpers 6 überdeckt, wobei zwischen dieser überdeckenden Materialbahn 18 und den nachfolgenden Windungen des Klemmkörpers 6 noch eine weitere Materialbahn 19 eingelegt ist. Dadurch entsteht eine spiralförmige Außenschlauchhülle 20 mit schuppenförmigem Charakter, deren Schuppen sich aus den einzelnen Materialbahnen 18, 19 ergeben und eine hohe Flexibilität dieses Fluidführungselementes 1 gewährleisten. Die Zwischenräume 21, 22 zwischen den Materialbahnen 18, 19 einerseits sowie der Außenwand der Innenschlauchhülle 2 und der Materialbahn 19 andererseits sind entweder mit Luft oder mit einem weichen, entropieelastischen, wärmebeständigen Werkstoff gefüllt, der auch eingeschäumt werden kann und zugleich die Materialeinlage bildet.

Im Ausführungsbeispiel der Fig. 4 ist das Fluidführungselement 1 gemäß Fig. 3 als Hauptkanal H verwendet worden, in welchem in Form einer zylindrischen Spirale mit sehr engem Windungsradius r mit insgesamt vier Windungen W ein Nebenkanal N derart angeordnet ist, daß er mit einer Außenumfangslinie T die Innenwand 23 der Innenschlauchhülle 2 tangiert und somit einen Fluiddurchfluß zwischen dem Außenumfang des Nebenkanals N und der Innenwand 23 der Innenschlauchhülle 2 unterbindet. In diesem Fall strömt das Fluid nur durch den Innenraum des Nebenkanals N, wobei der Hauptkanal H lediglich als Aufnahmebehälter mit zusätzlich dämpfenden Effekt für den Nebenkanal N dient.

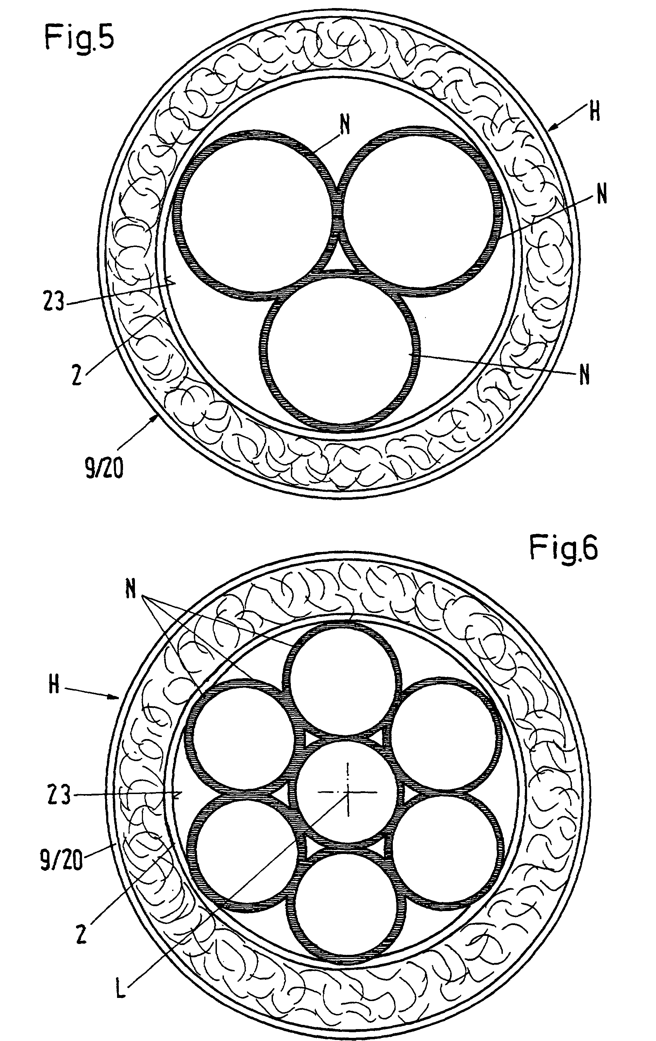

Im Ausführungsbeispiel der Fig. 5 sind in einem Hauptkanal H mit kreisrundem Querschnitt drei um je 120° zueinander versetzte sowohl sich untereinander als auch die Innenwand 23 der Innenschlauchhülle 2 des Hauptkanals H tangierende Nebenkanäle N mit kreisrunder Querschnittsform angeordnet.

Einen ähnlichen Aufbau zeigt auch die Fig. 6. Darin sind in einem Hauptkanal H mit kreisrundem Querschnitt insgesamt sieben Nebenkanäle N mit untereinander gleichem, kreisrundem Querschnitt gleichmäßig angeordnet, von denen einer konzentrisch zur Längsachse L des Hauptkanals H und die anderen sechs um je 60° zueinander um den ersten herum angeordnet sind, die sich untereinander tangieren und von denen die sechs außenliegenden Nebenkanäle N auch die Innenwand 23 der Innenschlauchhülle 2 des Hauptkanals H tangieren.

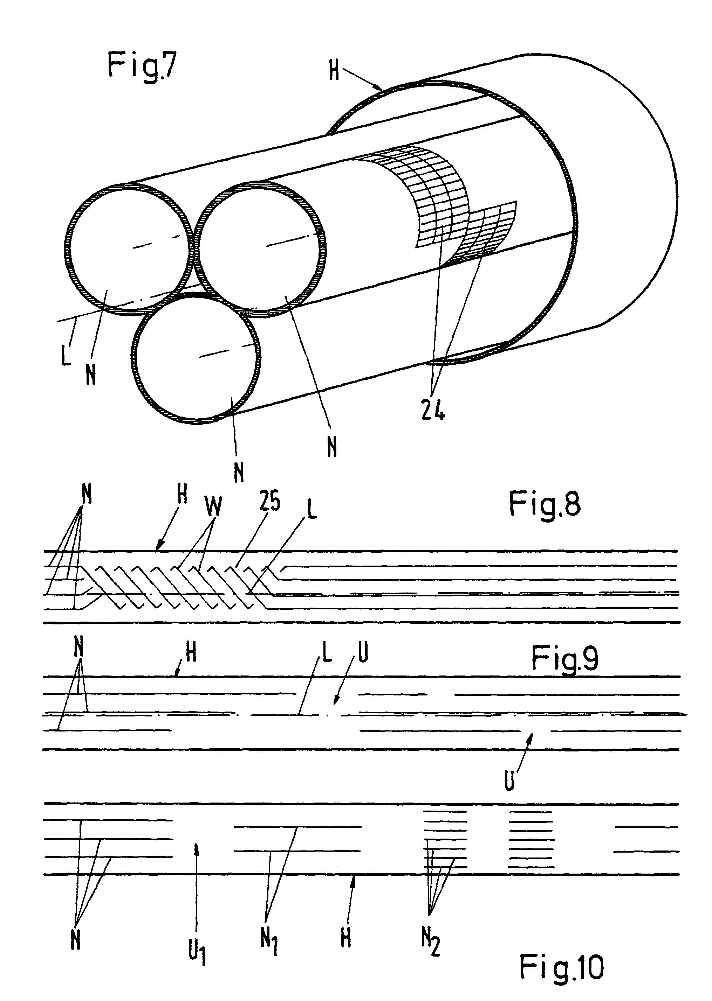

In Fig. 7, dessen Querschnitt prinzipiell dem von Fig. 5 entspricht, sind drei - oder mehr - Nebenkanäle N ähnlich wie in der Querschnittsansicht der Fig. 5 in einem Hauptkanal H angeordnet. Von diesen Nebenkanälen N zeigt einer mehrere gitterförmige Durchtrittsöffnungen 24, die sowohl die Innenschlauchhülle 2 als auch die Materialeinlage 10 und die Außenschlauchhülle 9, 20 durchbrechen.

Im Ausführungsbeispiel der Fig. 8 sind vier gleichmäßig in einem Hauptkanal H angeordnete Nebenkanäle N in einem Bereich 25 kordelähnlich miteinander verdrillt, wobei ein jeder Nebenkanal N etwa neun Windungen W aufweist.

Im Ausführungsbeispiel der Fig. 9 sind drei im wesentlichen in Richtung zur Längsachse L verlaufende Nebenkanäle N in einem Hauptkanal H mit ungleichmäßigen Unterbrechungen U versehen, wodurch die Moden sowie andere Schallfeldstrukturen wie z.B. Longitudinalwellen unterbrochen werden und durch zusätzliche Absorption, Reflexion und Interferenzerscheinungen eine entsprechende Herabsetzung der Schallintensität erreicht wird.

Ein vorteilhafter Effekt wird auch erzielt, wenn gemäß Fig. 10 in einem Hauptkanal H Nebenkanäle N, N₁, N₂ mit unterschiedlichem Durchmesser sowie einer gleichmäßigen Unterbrechung U₁ angeordnet werden. Dadurch wird das jeweilige Strömungsfluid mit seinem Schallpegel einmal diffusorartig von drei Nebenkanälen N in zwei erweiterte Nebenkanäle N₁ überführt und sodann wieder in sieben Nebenkanäle N₂ mit entsprechend vermindertem Durchströmquerschnitt hineingequetscht.

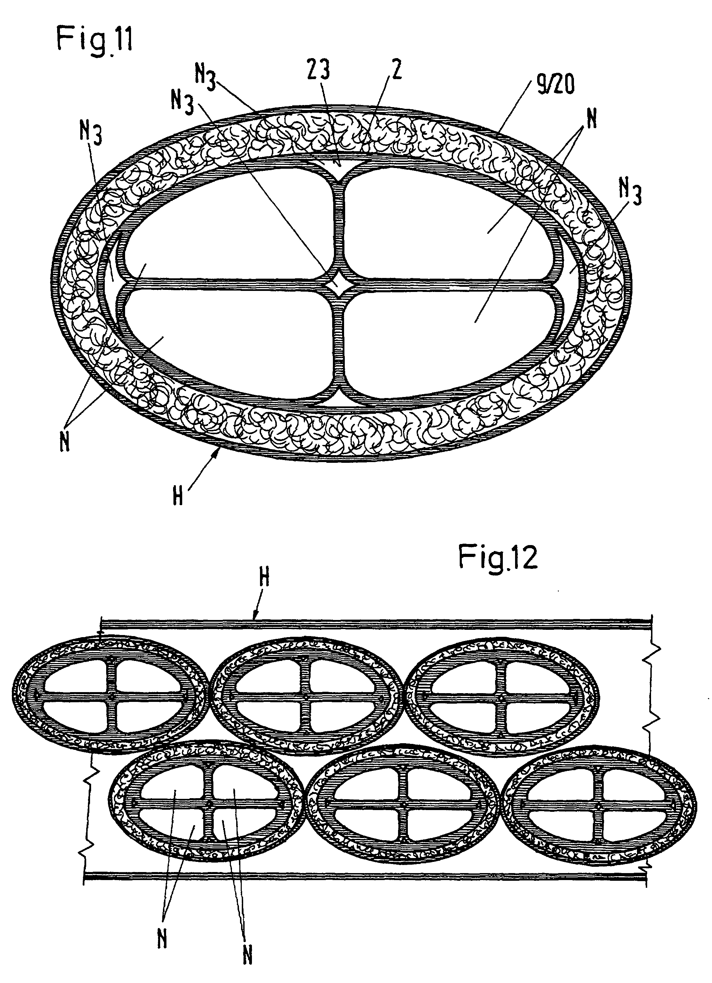

Im Ausführungsbeispiel der Fig. 11 sind in einem Hauptkanal H mit elliptischem Querschnitt insgesamt vier teilelliptische Nebenkanäle N angeordnet, zu denen noch drei Nebenkanäle N₃ mit unterschiedlichem Durchströmquerschnitt hinzutreten. Bei diesem Fluidführungselement 1 wird die entscheidende Dämmung und Dämpfung der Schallintensität durch die Nebenkanäle N und zu einem geringen Teil durch die Nebenkanäle N₃ erzielt. Wenn ein Fluidführungselement 1 gemäß Fig. 11 zu einer Wendel gemäß dem Nebenkanal N in Fig. 3 verwunden wird und in einem Hauptkanal H gemäß einer der Figuren 1 bis 3 angeordnet wird, entsteht in der Querschnittsansicht die Ansicht der Fig. 12. In diesem Fall wird der Hauptkanal H der Fig. 11 von vier spiralförmig gewundenen Nebenkanälen mit ellipsenabschnittsförmigem Querschnitt durchsetzt. Der Hauptkanal H kann einen kreisrunden oder gleichfalls einen elliptischen Querschnitt aufweisen.

Bei sämtlichen Ausführungsformen der Figuren 5 bis 12 kann der jeweilige Hauptkanal H einen der speziellen Aufbauten der Querschnittsansichten der Figuren 1 bis 3 aufweisen. Dabei hat sich die Querschnittsform der Fig. 3 insbesondere für Nebenkanäle bewährt, weil sie sich mit relativ geringem Kraftaufwand sowie mit äußerst geringem Windungsradius r verwinden läßt und damit einen überraschend guten Dämpfungseffekt ergeben. Grundsätzlich sind jedoch sowohl für den Hauptkanal H als auch für den Nebenkanal N jeder der drei Grundausführungsformen der Figuren 1 bis 3 wahlweise sowie nach dem jeweiligen Anwendungsfall einsetzbar.

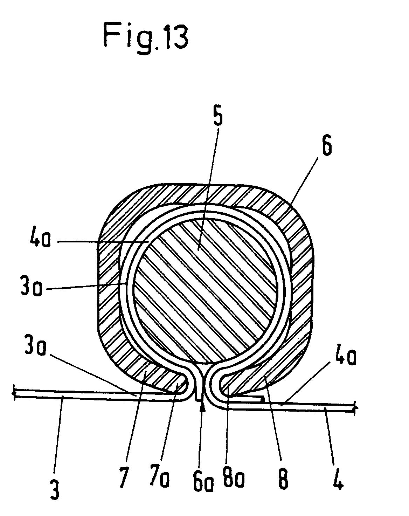

In Fig. 13 ist in vergrößerter Darstellung der Aufbau der Innenschlauchhülle 2, mit dem auch der Aufbau der Außenschlauchhülle 9 von Fig. 2 übereinstimmt, abgebildet. Die beiden spiralförmigen Materialbahnen 3, 4 werden um einen spiralförmigen Stützkörper 5 mit etwa kreisrundem Querschnitt aus Metall oder Keramik mit ihren sich überlappenden Seitenenden 3a, 4a geschlungen und sodann von dem gleichfalls spiralförmigen Klemmkörper 6 mit C-förmigem Querschnitt umgriffen und zusammengehalten. Die Schenkelleisten 7, 8 des Klemmkörpers 6 stehen sich an der Öffnungsstelle 6a gegenüber und klemmen an dieser Stelle die überlappenden Seitenenden 3a, 4a der Materialbahnen 3, 4. Dabei sind die Kanten 7a, 8a der Schenkelleisten 7, 8 abgerundet, um ein Einreißen der Materialbahnen 3, 4 an dieser Stelle zu verhindern. Dieser prinzipielle Aufbau der beiden Materialbahnen 3, 4 in Verbindung mit dem Stützkörper 5 und dem Klemmkörper 6 ist mit mehreren Varianten in allen Einzelheiten in der DE 37 20 231 A1 beschrieben und daher nicht Gegenstand der vorliegenden Erfindung.

Im Ausführungsbeispiel der Fig. 3 wird zwischen den Schenkelleisten 7, 8 des Klemmkörpers 6 mit C-förmigem Querschnitt noch zusätzlich die Materialbahn 18 geklemmt, so, wie es aus Fig. 3 ersichtlich ist. Bei hohen Temperaturen haben sich sowohl Stützkörper 5 als auch Klemmkörper 6 aus Keramik gegenüber metallischen Werkstoffen bewährt. Bei der Schalldämpfung ist die Masse des Spiralkörpers 5 und des Klemmkörpers 6 unter anderem ein entscheidendes Kriterium, um die Schallintensität in den Hauptkanälen H und den Nebenkanälen N zu dämpfen. Aus diesem Grunde können bei bestimmten anderen Anwendungen diese massebehafteten Metall- und Keramikelemente 5, 6 auch aus regelmäßig an der Außenseite der Innenschlauchhülle 2 oder Außenschlauchhülle 9, 20 der Hauptkanäle H und der Nebenkanäle N befestigten, nicht dargestellten Metall- oder Keramikstücken bestehen.

### Bezugszeichenliste:

- Fluidführungselement: 1
- Schlauchhüllen: 2, 9, 20
- Materialbahnen: 3, 4, 11, 12, 18, 19
- Seitenenden der Materialbahnen 3, 4: 3a, 4a
- massebehaftete Elemente: 5, 6; 13, 14
- öffnungsstelle des Klemmkörpers 6: 6a
- Schenkelleisten: 7, 8
- Materialeinlage: 10
- Seitenenden der Materialbahnen 11, 12: 11a, 12a
- Stützkörper: 13
- Klemmkörper: 14
- Öffnungsseite des Klemmkörpers 14: 15
- Schenkelleisten: 16, 17
- Ende der Materialbahn 18: 18a
- Zwischenräume: 21, 22
- Innenwand der Innenschlauchhülle 2: 23
- Durchgangsöffnungen: 24
- verdrillter Bereich: 25
- Hauptkanal: H
- Nebenkanäle: N, N₁, N₂, N₃
- Windungen: W
- Windungsradius: r
- Längsachse des Hauptkanals H: L
- gleichmäßige Unterbrechung: U₁
- ungleichmäßige Unterbrechung: U
- Außenumfangslinie: T

## Patentansprüche

1. Fluidführungselement (1) mit schallweichen Wänden zum Dämmen und Dämpfen von sich in Hauptkanälen (H) ausbreitenden Geräuschen, welches aus einer flexiblen, mit an ihrer Außenseite massebehafteten Elementen (5, 6; 13, 14) versehenen sowie je nach mechanischer, chemischer oder kalorischer Belastung durch das Fluid resistenten Innenschlauchhülle (2), aus einer Außenschlauchhülle (9, 20) und aus einer zwischen den Schlauchhüllen (2; 9, 20) angeordneten, weichen sowie gleichfalls flexiblen und zumindest gegen kalorische Belastungen resistenten Materialeinlage (10) hergestellt ist und zwischen seinem Fluideinlaß und seinem Fluidauslaß mindestens eine Windung (W) von 360° aufweist, wobei das Fluidführungselement (1) in seinem Innenraum als ersten Hauptkanal (H) mit mindestens einem über seinen Querschnitt verteilten Nebenkanal (N) mit schallweichen Wänden versehen ist, der sich nach dem vorgenannten Aufbau des Hauptkanals (H) aus einer mit massebehafteten Elementen (5, 6; 13, 14) versehenen Innenschlauchhülle (2), aus einer Außenschlauchhülle (9, 20) und aus einer zwischen den Schlauchhüllen (2; 9, 20) angeordneten weichen Materialeinlage (10) zusammensetzt und mit mindestens einer längs im Hauptkanal (H) oder radial zur Längsachse (L) im Hauptkanal (H) verlaufenden Windung (W) von 360° versehen ist.

2. Fluidführungselement nach Anspruch 1,
**dadurch gekennzeichnet**, daß vor dem Einlaß zum ersten Hauptkanal (H) ein Verbindungskanal als zweiter Hauptkanal (H) mit mindestens einem über seinen Querschnitt verteilten Nebenkanal (N) mit schallweichen Wänden angeordnet ist.

3. Fluidführungselement nach Anspruch 1 und 2, **dadurch gekennzeichnet ,** daß sowohl die Innenschlauchhülle (2) der Hauptkanäle (H) als auch die Innenschlauchhülle (2) der Nebenkanäle (N) je nach mechanischer, chemischer oder kalorischer Belastung durch das zu führende Fluid aus einem Textil, aus Metalldraht-, Glasfaser-, Synthetik-, Natur-, Keramikgewebe, Nonwoven, Metallfilme, wie Nickel und Edelstahlfilme, oder einer weichen, dünnen Folie aus Polyurethan, Polysulfon, Polyimid, Polyamid, Polyester, Polypropylen oder Polytetrafluorethylen oder einer Kombination dieser Materialien bestehen, die mit einer aufgalvanisierten, aufgedampften oder durch Kathodenzerstäubung (sputtering) aufgebrachten Metallbeschichtung versehen sind.

4. Fluidführungselement nach einem oder mehreren der Ansprüche 1 bis 3, **dadurch gekennzeichnet ,** daß die Materialeinlage (10) zwischen der Innen- und der Außenschlauchhülle (2, 9) der Haupt- und Nebenkanäle (H, N) aus einem Haufwerk von Mineralfasern und/oder Metallfasern und/oder Spänen und/oder Chips aus entropieelastischen Materialien oder aus einem eingeschäumten, wärmebeständigen, entropieelastischen Werkstoff hergestellt ist.

5. Fluidführungselement nach einem oder mehreren der Ansprüche 1 bis 4, **dadurch gekennzeichnet ,** daß die Außenschlauchhülle (9, 20) der Hauptkanäle (H) und der Nebenkanäle (N) aus einem gas- und flüssigkeitsdichten Kunststoff, wie Polytetrafluorethylen (PTFE), Tetrafluorethylen-Derivat (PFA und FEP), Polyamid (PA), Polysulfon, Polyimid, Polyester (PETP), Polypropylen oder einem ein- oder beidseitig mit diesen Kunststoffen beschichteten oder unbeschichteten Textil aus Draht- oder Glasfaser, Synthetik-, Natur- oder Keramikgewebe, aus Nonwoven oder einer Werkstoffkombination dieser Materialien besteht.

6. Fluidführungselement nach einem oder mehreren der Ansprüche 1 bis 5, **dadurch gekennzeichnet**, daß die Außenschlauchhülle (20) der Nebenkanäle (N) und/oder der Hauptkanäle (H) aus mehreren sich gegenseitig überlappenden und dabei stets die massebehafteten Elemente (5, 6) der Innenschlauchhülle (2) abdeckenden sowie von der Außenwand der Innenschlauchhülle (2) beginnenden, ring- oder spiralförmig gewundenen Lagen (18, 19) aus Filz, Nonwoven, Mineralwolle oder texturiertem Gewebe aus Stahlfasern besteht, die in Verbindung mit der zwischen den Lagen (18, 19) befindlichen Luft und/oder einem wärmebeständigen, entropieelastischen Werkstoff zugleich die Materialeinlage (10) bilden.

7. Fluidführungselement nach einem oder mehreren der Ansprüche 1 bis 6, **dadurch gekennzeichnet,** daß die massebehafteten Elemente (5, 6; 13, 14) aus metallischen oder keramischen Einzelringen bestehen, welche die Innenschlauchhülle (2) der Haupt- und der Nebenkanäle (H, N) umgreifen oder die aus Schlauchabschnitten bestehende Innenschlauchhülle (2) zusammenhalten.

8. Fluidführungselement nach einem oder mehreren der Ansprüche 1 bis 6, **dadurch gekennzeichnet,** daß die massebehafteten Elemente (5, 6) sowohl der Hauptkanäle (H) als auch der Nebenkanäle (N) von einer Metall- oder Keramikspirale gebildet sind, welche die aus spiralförmigen Materialbahnen (3, 4) bestehende Innenschlauchhülle (2) an ihren sich überlappenden Seitenenden (3a, 4a) zusammenhält.

9. Fluidführungselement nach einem oder mehreren der Ansprüche 1 bis 6, **dadurch gekennzeichnet**, daß die massebehafteten Elemente (5, 6; 13, 14) aus regelmäßig an der Außenseite der Innenschlauchhülle (2) der Hauptkanäle (H) und der Nebenkanäle (N) befestigten Metall- oder Keramikstücken bestehen.

10. Fluidführungselement nach einem oder mehreren der Ansprüche 1 bis 6, **dadurch gekennzeichnet,** daß die massebehafteten Elemente (5, 6; 13, 14) sowohl der Hauptkanäle (H) als auch der Nebenkanäle (N) aus einer die Innenschlauchhülle (2) umgreifenden Metall- oder Keramikspirale und aus einem diese wiederum umgreifenden sowie mit der gleichen Windungsform versehenen Rohre, Schläuche oder ähnlichen Behältern aus Metall oder Keramik bestehen, die mit der jeweiligen Metall- oder Keramikspirale durch Klammern oder eingeklipste Bänder verbunden sind, wobei der Zwischenraum zwischen der Innenwand des Rohres oder Schlauches und der Außenwand der Innenschlauchhülle (2) mit Wasser, Hochtemperaturöl oder einer schmelzenden Metallegierung gefüllt ist.

11. Fluidführungselement nach einem oder mehreren der Ansprüche 1 bis 10, **dadurch gekennzeichnet,** daß die Nebenkanäle (N) im ersten und/oder jedem weiteren Hauptkanal (H) um die mittlere Längsachse (L) der Hauptkanäle (H) miteinander kordelähnlich verdrillt sind.

12. Fluidführungselement nach einem oder mehreren der Ansprüche 1 bis 11, **dadurch gekennzeichnet,** daß die Nebenkanäle (N, N₁, N₂, N₃) sowohl im ersten als auch im zweiten Hauptkanal (H) in Richtung der Längsachse (L) der Hauptkanäle (H) verlaufen und mit gleichmäßigen oder ungleichmäßigen Unterbrechungen (U, U₁) und/oder abschnittsweise mit unterschiedlicher Anzahl über den Querschnitt des Hauptkanals (H) und demzufolge mit unterschiedlichen Querschnitten versehen sind.

13. Fluidführungselement nach einem oder mehreren der Ansprüche 1 bis 12, **dadurch gekennzeichnet ,** daß die Nebenkanäle (N) in ihren Wandungen mit beliebigen, insbesondere siebartigen Durchgangsöffnungen (24) zu benachbarten Nebenkanälen (N) versehen sind.

14. Fluidführungselement nach einem oder mehreren der Ansprüche 1 bis 13, **dadurch gekennzeichnet,** daß im ersten und/oder zweiten Hauptkanal (H) die Querschnittsform der Haupt-und der Nebenkanäle (H, N) entweder kreisrund, elliptisch oder ellipsenabschnittsförmig gestaltet sind.

15. Fluidführungselement nach einem oder mehreren der Ansprüche 1 bis 14, **dadurch gekennzeichnet,** daß in einem kreisrunden Querschnitt der Hauptkanäle (H) mindestens drei Nebenkanäle (N) mit gleichem Durchströmquerschnitt angeordnet sind, die untereinander an ihren Außenflächen und mit der Innenwand (23) der Hauptkanäle (H) tangieren und längs in jedem Hauptkanal (H) verlaufen.

16. Fluidführungselement nach Anspruch 15, **dadurch gekennzeichnet,** daß in einem kreisrunden Querschnitt der Hauptkanäle (H) drei um je 120° zueinander versetzte sowohl sich untereinander als auch die Innenwand (23) der Innenschlauchhülle (2) des Hauptkanals (H) tangierende Nebenkanäle (N) mit kreisrunder Querschnittsform angeordnet sind.

17. Fluidführungselement nach einem der Ansprüche 15 und 16, **dadurch gekennzeichnet,** daß im ersten und/oder im zweiten Hauptkanal (H) mit kreisrundem Querschnitt insgesamt sieben Nebenkanäle (N) mit untereinander gleichem kreisrundem Querschnitt gleichmäßig angeordnet sind, von denen einer konzentrisch zur Längsachse (L) des Hauptkanals (H) und die anderen sechs um je 60° zueinander um den ersten herum angeordnet sind, die sich untereinander tangieren und von denen die sechs außenliegenden Nebenkanäle (N) auch die Innenwand (23) der Innenschlauchhülle (2) tangieren.

## Claims

1. Fluid guiding element (1), having walls of low acoustic impedance for the insulation and damping of noises propagating in main channels (H), produced from a flexible internal hose covering (2), which is provided with massive elements (5, 6; 13, 14) on its external side and is resistant to mechanical, chemical, and caloric stresses from the fluid, from an external hose covering (9, 20), and from a soft material insert (10), located between the hose coverings (2; 9, 20), which is also flexible and resistant to at least caloric stresses, and having at least one turn (W) of 360° between its fluid intake and its fluid outlet, wherein the fluid guiding element (1) is provided, distributed over its cross-section in the interior space acting as its first main channel (H), with at least one subchannel (N), having walls of low acoustic impedance, which, according to the previously described design of the main channel (H), comprises an internal hose covering (2) provided with massive elements (5, 6; 13, 14), an external hose covering (9, 20), and a soft material insert (10) located between the hose coverings (2; 9, 20), and is provided with at least one turn (W) of 360° running longitudinally in the main channel (H) or radial to the longitudinal axis (L) of the main channel (H).

2. Fluid guiding element according to claim 1, characterized in that a connection channel acting as a second main channel (H), having at least one subchannel (N) with walls of low acoustic impedance distributed over its cross section, is located before the intake to the first main channel (H).

3. Fluid guiding element according to claims 1 and 2, characterized in that both the internal hose covering (2) of the main channels (H) and the internal hose covering (2) of the subchannels (N), depending on the mechanical, chemical, or caloric stresses from the fluid to be guided, consist of metal wire fabric, glass fiber fabric, synthetic fabric, natural fabric, ceramic fabric, nonwoven, metal films, such as nickel or stainless-steel films, or a soft, thin film made of polyurethane, polysulfone, polyimide, polyamide, polyester, polypropylene, or polytetrafluorethylene, or a combination of these materials provided with a metal coating applied through electroplating, vapor deposition, or cathode sputtering.

4. Fluid guiding element according to one or more of the claims 1 to 3, characterized in that the material insert (10) between the internal and external hose coverings (2, 9) of the main channels and subchannels (H, N) is produced from fragments of mineral fibers and/or metal fibers and/or shavings and/or chips made of entropy-elastic materials or from foamed, heat resistant, entropy-elastic material.

5. Fluid guiding element according to one or more of the claims 1 to 4, characterized in that the external hose covering (9, 20) of the main channels (H) and the subchannels (N) consists of a gas-tight and fluid-tight plastic, such as polytetrafluorethylene (PTFE), a tetrafluoroethylene derivative (PFA and FEP), polyamide (PA), polysulfone, polyimide, polyester (PETP), polypropylene, or a textile, uncoated or coated on one or both sides with these plastics, made of wire or glass fibers, synthetic fabric, natural fabric, or ceramic fabric, a nonwoven, or a combination of these materials.

6. Fluid guiding element according to one or more of the claims 1 to 5, characterized in that the external hose covering (20) of the subchannels (N) and/or the main channels (H) consists of several layers (18, 19) wound in a ring or spiral shape, made of felt, nonwoven, rockwool, or textured fabric made of steel fibers, which mutually overlap and thus continuously cover the massive elements (5, 6) of the internal hose covering (2) and which begin at the external wall of the internal hose covering (2), and which, in combination with the air and/or a heat resistant, entropy-elastic material located between the layers (18, 19), simultaneously form the material insert (10).

7. Fluid guiding element according to one or more of the claims 1 to 6, characterized in that the massive elements (5, 6; 13, 14) consist of individual metallic or ceramic rings which surround the internal hose covering (2) of the main channels and the subchannels (H, N) or hold together the internal hose covering (2) consisting of hose sections.

8. Fluid guiding element according to one or more of the claims 1 to 6, characterized in that the massive elements (5, 6) of both the main channels (H) and the subchannels (N) are formed by a metal or ceramic spiral which holds together the internal hose covering (2), consisting of spiral-shaped material webs (3, 4), at its overlapping lateral ends (3a, 4a).

9. Fluid guiding element according to one or more of the claims 1 to 6, characterized in that the massive elements (5, 6; 13, 14) consist of metal or ceramic pieces attached at regular intervals to the external side of the internal hose covering (2) of the main channels (H) and the subchannels (N).

10. Fluid guiding element according to one or more of the claims 1 to 6, characterized in that the massive elements (5, 6; 13, 14) of both the main channels (H) and the subchannels (N) consist of a metal or ceramic spiral which surrounds the internal hose covering (2), and of a tube, hose, or similar container made of metal or ceramic, which surrounds this spiral in turn and which is provided with the same spiral shape, connected with the respective metal or ceramic spiral by clamps or clipped-on bands, with the intermediate space between the inner wall of the tube or hose and the outer wall of the internal hose covering (2) filled with water, high-temperature oil, or a liquescent metal alloy.

11. Fluid guiding element according to one or more of the claims 1 to 10, characterized in that the subchannels (N) in the first and/or each further main channel (H) around the central longitudinal axis (L) of the main channels (H) are twisted together like twine.

12. Fluid guiding element according to one or more of the claims 1 to 11, characterized in that the subchannels (N, N₁, N₂, N₃) run in the direction of the longitudinal axis (L) of the main channels (H) in both the first and the second main channel (H) and are provided with regular or irregular interruptions (U, U₁) and/or are provided, in sections, in varying numbers over the cross-section of the main channel (H) and, as a consequence, are provided with varying cross-sections.

13. Fluid guiding element according to one or more of the claims 1 to 12, characterized in that the subchannels (N) are provided with an arbitrary number of through openings (24), preferably in a sieve shape, to neighboring subchannels (N).

14. Fluid guiding element according to one or more of the claims 1 to 13, characterized in that in the first and/or second main channel (H), the cross-sectional shapes of the main channels and the subchannels are designed to be either circular, elliptical, or elliptical in sections.

15. Fluid guiding element according to one or more of the claims 1 to 14, characterized in that at least three subchannels (N) with the same flow cross-section, which are, at their external surfaces, tangent to one another and to the inner wall (23) of the main channels and which run longitudinally in each main channel (H), are located in a circular cross-section of the main channels (H).

16. Fluid guiding element according to claim 15, characterized in that three subchannels (N) with circular cross-sectional shapes, displaced by 120° from one another and tangent to each other as well as the inner wall (23) of the internal hose covering (2) of the main channel (H), are located in a circular cross-section of the main channels (H).

17. Fluid guiding element according to one of the claims 15 and 16, characterized in that the total of seven subchannels (N) with the same circular cross-section are symmetrically positioned in the first and/or the second main channel (H), with one positioned concentric to the longitudinal axis (L) of the main channel (H) and the other six positioned at 60° to one another around the first, and with all of the subchannels (N) tangent to one another and the six outer subchannels (N) also tangent to the inner wall (23) of the internal hose covering (2).

## Revendications

1. Elément conduisant les fluides (1) avec des parois acoustiquement molles pour arrêter et atténuer des bruits se propageant dans les canaux principaux (H), qui est produit à partir d'une gaine de tuyau interne souple, pourvue sur son côté externe d'éléments à charge massique (5, 6; 13, 14), et aussi résistante en fonction de la sollicitation mécanique, chimique ou calorique exercée par le fluide, d'une gaine de tuyau externe (9, 20) et d'une couche de matériau molle disposée (10) entre les gaines de tuyau (2; 9, 20), et aussi souple et au moins résistante aux sollicitations caloriques, et comprend au moins un enroulement (W) de 360° entre son entrée de fluide et sa sortie de fluide, où l'élément conduisant les fluides (1) est pourvu dans son espace intérieur, en tant que premier canal principal (H), d'au moins un canal secondaire distribué sur sa section, ayant des parois acoustiquement molles qui, selon la construction précitée du canal principal (H), se compose d'une gaine de tuyau interne (2) pourvue d'éléments à charge massique (5, 6; 13, 14), d'une gaine de tuyau externe (9, 20) et d'une couche de matériau (10) molle disposée entre les gaines de tuyau (2; 9, 20) et qui est pourvu d'au moins un enroulement (W) de 360° se prolongeant longitudinalement dans le canal principal (H) ou radialement par rapport à l'axe longitudinal (L) dans le canal principal (H).

2. Elément conduisant les fluides selon la revendication 1, caractérisé en ce qu'un canal de raccordement en tant que deuxième canal principal (H) avec au moins un canal secondaire (N) ayant des parois acoustiquement molles, distribué sur sa section, est disposé devant l'entrée du premier canal principal (H).

3. Elément conduisant les fluides selon la revendication 1 et 2, caractérisé en ce que, aussi bien la gaine de tuyau interne (2) des canaux principaux (H) que la gaine de tuyau interne (2) des canaux secondaires (N) sont constituées, en fonction de la sollicitation mécanique, chimique ou calorique exercée par le fluide à conduire, d'une matière textile, d'un tissu de fils métalliques, de fibres de verre, synthétique, naturel, céramique, de non-tissé, de films métalliques, comme les films de nickel et d'acier inoxydable, ou d'une feuille mince, molle, à base de polyuréthanne, de polysulfone, de polyimide, de polyamide, de polyester, de polypropylène ou de polytétrafluoroéthylène ou d'une association de ces matériaux, qui sont pourvus d'un revêtement métallique appliqué par galvanisation, vaporisation ou pulvérisation cathodique ("sputtering").

4. Elément conduisant les fluides selon l'une ou plusieurs des revendications 1 à 3, caractérisé en ce que la couche de matériau (10) entre la gaine de tuyau interne et la gaine de tuyau externe (2, 9) des canaux principaux et secondaires (H, N) est produite à partir d'un amoncellement de fibres minérales et/ou de fibres métalliques et/ou de copeaux et/ou de substrats constitués de matières à entropie élastique ou d'une substance expansée, résistante à la chaleur, à entropie élastique.

5. Elément conduisant les fluides selon l'une ou plusieurs des revendications 1 à 4, caractérisé en ce que la gaine de tuyau externe (9, 20) des canaux principaux (H) et des canaux secondaires (N) est constituée d'une matière plastique étanche aux gaz et aux liquides, comme le polytétrafluoroéthylène (PTFE), un dérivé du tétrafluoroéthylène (PFA et FEP), le polyamide (PA), la polysulfone, le polyimide, le polyester (PETP), le polypropylène ou une matière textile revêtue de ces matières plastiques d'un côté ou des deux côtés ou non revêtue, constituée de fibre de fil métallique ou de fibre de verre, de tissu naturel ou céramique, de non-tissé ou d'une association matérielle de ces matériaux.

6. Elément conduisant les fluides selon l'une ou plusieurs des revendications 1 à 5, caractérisé en ce que la gaine de tuyau externe (20) des canaux secondaires (N) et/ou des canaux principaux (H) est constituée de plusieurs nappes (18, 19) qui se chevauchent mutuellement et en même temps couvrent toujours les éléments (5, 6) à charge massique de la gaine de tuyau interne (2), ainsi que de nappes enroulées en forme d'anneau ou de spirale partant de la paroi externe de la gaine de tuyau interne (2), constituées de feutre, de non-tissé, de laine minérale ou de tissu texturé constitué de fibres d'acier, qui, en combinaison avec l'air se trouvant entre les nappes (18, 19) et/ou avec une substance à entropie élastique, résistante à la chaleur, forment en même temps la couche de matériau (10).

7. Elément conduisant les fluides selon l'une ou plusieurs des revendications 1 à 6, caractérisé en ce que les éléments (5, 6; 13, 14) à charge massique sont constitués d'anneaux individuels métalliques ou céramiques, lesquels enveloppent la gaine de tuyau interne (2) des canaux principaux et des canaux secondaires (H, N) ou maintiennent la cohésion de la gaine de tuyau interne (2) constituée de sections de tuyau.

8. Elément conduisant les fluides selon l'une ou plusieurs des revendications 1 à 6, caractérisé en ce que les éléments à charge massique (5, 6) aussi bien des canaux principaux (H) que des canaux secondaires (N) sont formés d'une spirale métallique ou céramique, qui maintient la cohésion de la gaine de tuyau interne (2) constituée de bandes de matériau (3, 4) en forme de spirale sur leurs extrémités latérales (3a, 4a) qui se chevauchent.

9. Elément conduisant les fluides selon l'une ou plusieurs des revendications 1 à 6, caractérisé en ce que les éléments (5, 6; 13, 14) à charge massique sont constitués de morceaux métalliques ou céramiques fixés régulièrement sur le côté externe de la gaine de tuyau interne (2) des canaux principaux (H) et des canaux secondaires (N).

10. Elément conduisant les fluides selon l'une ou plusieurs des revendications 1 à 6, caractérisé en ce que les éléments (5, 6; 13, 14) à charge massique, aussi bien des canaux principaux (H) que des canaux secondaires (N) sont constitués d'une spirale métallique ou céramique enveloppant la gaine de tuyau interne (2) et de tubes, de tuyaux ou de récipients analogues en métal ou céramique, enveloppant à nouveau celle-ci et aussi pourvus de la même forme d'enroulement, qui sont raccordés à la spirale métallique ou céramique respective, par des attaches ou des bandes clipsées, l'intervalle entre la paroi interne du tube ou du tuyau et la paroi externe de la gaine de tuyau interne (2) étant rempli avec de l'eau, une huile pour haute température ou un alliage métallique en liquescence.

11. Elément conduisant les fluides selon l'une ou plusieurs des revendications 1 à 10, caractérisé en ce que, les canaux secondaires (N) dans le premier et/ou chaque canal principal supplémentaire (H) sont torsadés entre eux autour de l'axe longitudinal moyen (L) des canaux principaux (H), de façon analogue à des cordons.

12. Elément conduisant les fluides selon l'une ou plusieurs des revendications 1 à 11, caractérisé en ce que, les canaux secondaires (N, N₁, N₂, N₃), aussi bien dans le premier que dans le deuxième canal principal (H) se prolongent en direction de l'axe longitudinal (L) des canaux principaux (H) et sont pourvus d'interstices réguliers ou irréguliers (U, U₁) et/ou par tronçons avec un nombre différent sur la section du canal principal (H) et par conséquent avec des sections différentes.

13. Elément conduisant les fluides selon l'une ou plusieurs des revendications 1 à 12, caractérisé en ce que les canaux secondaires (N) sont pourvus dans leurs parois, d'ouvertures de passage (24) quelconques, en particulier de façon criblée, donnant sur les canaux secondaires voisins (N).

14. Elément conduisant les fluides selon l'une ou plusieurs des revendications 1 à 13, caractérisé en ce que, dans le premier et/ou le deuxième canal principal (H), la forme de la section transversale des canaux principaux et celle des canaux secondaires (H, N) présente une forme ronde circulaire, elliptique ou une forme de section d'ellipse.

15. Elément conduisant les fluides selon l'une ou plusieurs des revendications 1 à 14, caractérisé en ce qu'au moins trois canaux secondaires (N) ayant la même section d'écoulement circulaire sont disposés dans une section ronde des canaux principaux (H), sont tangents entre eux au niveau de leur surface externe et tangents avec la paroi interne (23) des canaux principaux (H) et se prolongent longitudinalement dans chaque canal principal (H).

16. Elément conduisant les fluides selon la revendication 15, caractérisé en ce que trois canaux secondaires (N) ayant une section circulaire, chacun étant décalé de 120° l'un par rapport à l'autre, sont disposés dans une section circulaire des canaux principaux (H), et aussi bien tangents l'un à l'autre que tangents à la paroi interne (23) de la gaine de tuyau interne (2) du canal principal (H).

17. Elément conduisant les fluides selon l'une quelconque des revendications 15 et 16, caractérisé en ce qu'au total sept canaux secondaires (N) ayant une même section circulaire, sont disposés régulièrement dans le premier et/ou le deuxième canal principal (H) ayant une section circulaire, où l'un des canaux est disposé concentriquement par rapport à l'axe longitudinal (L) du canal principal (H) et les six autres sont disposés respectivement à 60° l'un de l'autre autour du premier, canaux qui sont tangents entre eux et dont les six canaux secondaires se trouvant à l'extérieur (N) sont également tangents à la paroi interne (23) de la gaine de tuyau interne (2).
